# FASCICULE DE BREVET EUROPEEN

(11) **EP 0 618 704 B1**
(45) Date de publication et mention de la délivrance du brevet: **20.05.1998**
(21) Numéro de dépôt: 94400538.8
(22) Date de dépôt: 11.03.1994
(51) Int. Cl.: H04L 12/56, H04B 7/195, H04B 7/26

(54) **Procédé pour la transmission d'informations par voie hertzienne**
Verfahren zur Übertragung von Informationen über Funkwege
Method of transmission of information over radio links

(30) Priorité: 02.04.1993 FR 9304103
(43) Date de publication de la demande: 05.10.1994
(73) Titulaire: SEXTANT AVIONIQUE, 92366 Meudon la Forêt Cédex (FR)
(72) Inventeur: Simon, Georges-Henri, F-91320 Wissous (FR); D'Silva, Cédric, F-78330 Fontenay le Fleury (FR)
(74) Mandataire: de Saint-Palais, Arnaud Marie

(56) Documents cités:
- EP-A- 0 201 308
- PROCEEDINGS OF THE IEEE, vol.72, no.11, Novembre 1984, NEW YORK US pages 1627 - 1636 K. BRAYER 'PACKET SWITCHING FOR MOBILE EARTH STATIONS VIA LOW-ORBIT SATELLITE NETWORK'
- FITH INTERNATIONAL CONFERENCE ON SYSTEMS ENGINEERING, Septembre 1987, FAIRBORN US pages 91 - 94 A. ANDREWS ET AL. 'KNOWLEDGE-BASED CONFIGURATION OF MULTI-HOP PACKET-SWITCHED RADIO NETWORKS'

## Description

La présente invention concerne un procédé pour la transmission d'informations par voie hertzienne, de type HF ou VHF, sur des distances relativement importantes excluant toute possibilité de liaison hertzienne directe et dans des régions non couvertes par des systèmes de relayage au sol. Bien entendu, ceci n'exclut pas l'utilisation de ce procédé sur des distances plus courtes et même dans des zones équipées d'autres systèmes de relayage.

Elle s'applique notamment aux communications air-sol pour l'échange de données ("Data Link", D/L) dans le domaine du transport aérien moyen ou long courrier.

D'une manière générale, on sait que pour ce type d'application, les principaux moyens de communication utilisés à l'heure actuelle sont :
- les réseaux de satellites de télécommunication (SATCOM D/L),
- les transmissions par ondes hertziennes (VHF D/L, HF D/L),
- les systèmes radar (mode S D/L).

Un exemple d'un système du premier type est fourni par le document "Proceedings of the IEEE, Vol. 72, no 11, Nov. 1984, New York, pages 1627-1636.

Il s'avère que ces différentes solutions présentent un certain nombre d'inconvénients.

Ainsi, l'inconvénient majeur des systèmes de communication par ondes hertziennes de type VHF consiste en ce que leur portée est limitée à l'horizon radio (portée radioélectrique en propagation directe). Cet inconvénient ne peut être supprimé que par la mise en place de relais entre deux stations situées hors de portée radio.

Un inconvénient semblable, lié à la couverture radar, existe pour le mode S D/L.

Il apparaît donc que dans le transport aérien, seule la communication par satellite (SATCOM), si elle est disponible, est applicable lors du survol de zones océaniques ou désertiques.

Néanmoins, cette solution reste coûteuse si l'on veut assurer une couverture de la totalité du globe terrestre : les systèmes existant à l'heure actuelle exigent le maintien en service d'un nombre important de satellites disposés de manière à ce qu'en chaque point du globe on ait un à deux satellites en vue.

En outre, cette solution rend l'utilisateur totalement tributaire du propriétaire du réseau de satellites.

L'invention a plus particulièrement pour but de supprimer ces inconvénients.

Elle propose, à cet effet, d'utiliser les avions qui volent dans le cadre normal de leurs activités, en tant que relais de transmission ouverts, qui échangent en permanence des informations avec les relais qui se trouvent momentanément à leur portée, ces relais constituant les noeuds d'un réseau de transmission dont la configuration varie à chaque instant.

Elle se base sur la constatation qu'en raison du niveau élevé du trafic aérien et à sa densité, il se trouve une multiplicité d'aérodynes, en particulier des avions dont la répartition géographique à chaque instant est telle qu'elle permet d'assurer une couverture radioélectrique suffisante du globe ou partie de celui-ci.

De plus, le besoin de communication est d'autant plus importante que le trafic est dense.

D'une façon plus précise, le procédé selon l'invention consiste à doter les aérodynes de systèmes relais de communication ouverts pouvant s'interconnecter à des systèmes relais appartenant à d'autres aérodynes se trouvant momentanément à sa portée radio, pour faire transiter les informations de relais en relais jusqu'à leur destination.

Pour parvenir à ce résultat, les informations pourront être présentées sous forme de paquets de données contenant chacun des informations d'identification du destinataire ainsi que des informations de routage.

Selon un mode d'exécution de l'invention, chaque système relais pourra avantageusement comprendre une base d'informations de routage, apte à recevoir des informations de routage provenant de systèmes relais voisins et à élaborer les informations de routage en vue de les transmettre à destination. Ce système relais peut également comprendre des moyens de relayage qui reçoivent les paquets de données émis par les systèmes relais voisins et qui, avant de les transmettre à destination d'un système relais voisin, associent à ces paquets de données des informations de routage déterminées en fonction des données de routage initialement contenues dans lesdits paquets et des informations de routage élaborées par ladite base.

Un mode de mise en oeuvre du procédé selon l'invention sera décrit ci-après, à titre d'exemple non limitatif, avec référence aux dessins annexés dans lesquels :
La figure 1 est une représentation schématique illustrant le principe du relayage d'informations entre deux stations identifiées ;
La figure 2 est un schéma synoptique d'un système relais selon l'invention.

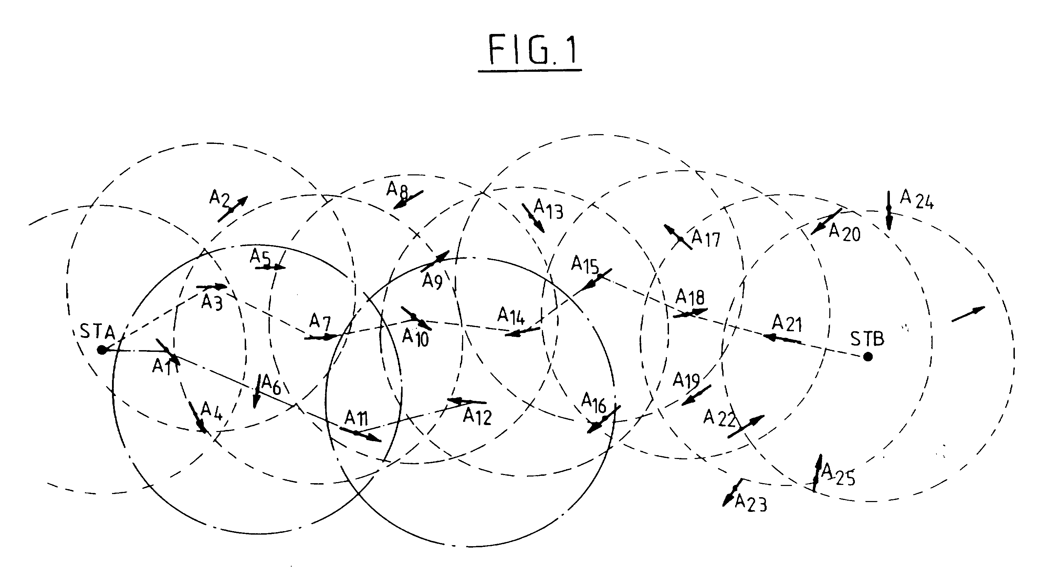

Dans l'exemple représenté figure 1, les deux stations STA, STB qui pourraient par exemple consister en des aéroports respectivement situés de part et d'autre de l'océan atlantique, sont représentées schématiquement par des points.

L'espace aérien compris entre ces deux points, qui ne se trouve pas couvert par un réseau de relais de retransmission installés au sol, à poste fixe, est emprunté par de nombreux avions suivant des itinéraires parfois différents les uns des autres.

Dans cet exemple, la position occupée par les avions à un instant donné a été indiquée schématiquement par des flèches, étant entendu que cette position, ainsi que la répartition des avions dans l'espace aérien, évoluent d'un instant à l'autre d'une façon quasiment aléatoire, vu du système.

Chacun de ces avions est équipé d'un système émetteur-récepteur de type VHF dont la portée radio est indiquée par un cercle centré sur l'avion.

Comme précédemment mentionné, pour permettre la transmission d'informations entre les stations A et B, entre un avion ou une station, ou même éventuellement entre avions, l'invention propose de se servir des avions qui se trouvent en vol dans l'espace aérien, en tant que systèmes relais ouverts d'un réseau de transmission, pour assurer la réception, le routage et la retransmission de ces informations, à destination d'un autre système relais, ou de la station destinatrice.

D'une façon plus précise, la fonction de chaque système relais est d'assurer le relayage et le routage vers d'autres systèmes relais de messages qui se présentent sous la forme de paquets de données agencés selon une trame prédéterminée qui incluent des données d'identification, des données relatives au destinataire et des données de routage.

A cet effet, chaque système relais doit pouvoir échanger des routes d'un domaine de routage à un autre, recevoir des informations sur des routes en provenance d'un autre relais, classifier ces routes et, pour chaque classification, sélecter la meilleure route pour chaque destination annoncée d'un paquet de données. Chaque route sélectée est rendue disponible au système de relayage et, en fonction de la situation locale, peut être annoncée à des systèmes relais appartenant à d'autres domaines de routage incluant des routes vers d'autres destinations.

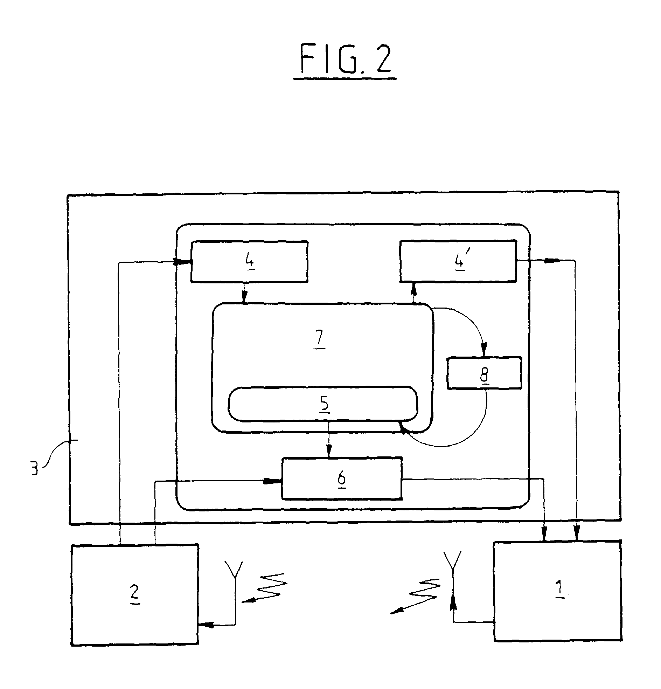

Pour parvenir à ces résultats, chaque système relais comprend, comme illustré sur la figure 2, un circuit émetteur 1, un circuit récepteur 2, ainsi qu'une unité de traitement 3 des informations reçues par le récepteur 2 et de celles qui doivent être transmises par l'émetteur 1.

D'une façon plus précise, l'unité de traitement 3 est conçue de manière à pouvoir, en permanence :
- recevoir des informations de routage ainsi que des messages à relayer, reçus par le circuit récepteur 2 (bloc 4),
- élaborer des informations de routage (bloc 4') en vue de les mettre à destination d'autres systèmes relais et à traiter (bloc 6) les paquets de données reçus pour permettre leur transmission à un autre système relais ou au destinataire.

Elle comprend une base d'informations de routage 7 qui reçoit et qui classifie les informations de routage et plus particulièrement les informations concernant la connectivité et la topologie des parcours. Ces informations sont réparties en trois catégories se rapportant respectivement :
- aux tables de routage de prochaine escale,
- aux listes de systèmes relais voisins,
- aux cartes définissant la topologie des réseaux.

Les tables de routage de prochaine escale contiennent les informations relatives des escales potentielles qui peuvent être sélectées pour acheminer les paquets de données vers une destination. Cette information est élaborée à partir des informations de routage transmises par les autres systèmes relais. La liste des systèmes relais voisins permet la détermination de la topologie locale. Des cartes de topologie de réseau fournissent une vue complète de la connectivité de l'ensemble du réseau et sont utilisées pour le calcul de parcours, au moyen d'algorithmes de routage.

La base d'informations de routage est exploitée par une base de règles 8 qui permet de déterminer, à partir des informations qu'elle contient, une information de routage concernant la meilleure route que devront prendre les paquets de données reçus par le système relais.

Ces informations sont transmises au système de traitement (bloc 6) qui les associe aux paquets de données avant de les transmettre au circuit émetteur 1.

L'établissement d'une communication entre deux systèmes relais, qui peut s'effectuer automatiquement, implique une séquence d'actions qui sera définie ci-après.

L'existence d'une connexion physique entre deux réseaux se manifeste tout d'abord au niveau des circuits émetteur-récepteur radiofréquence 1, 2 des deux systèmes relais.

Bien entendu, une telle connexion ne s'établit que dans la mesure où les conditions de connectivité sont remplies.

Toutefois, une connexion physique qui s'effectue au niveau des circuits émetteurs-récepteurs ne signifie pas pour autant que la connexion (avec échange d'informations) entre les deux systèmes relais est établie.

En effet, en l'absence de disposition particulière, aucun des deux relais n'a conscience d'être raccordé à l'autre.

Pour établir cette connexion, chaque système relais doit transmettre un message d'adressage contenant des données spécifiques, notamment des données d'adressage de son système.

Ainsi, lorsque la connexion est réalisée au niveau des circuits émetteurs-récepteurs, les deux systèmes relais entament une transmission périodique de messages d'adressages respectifs. La réception par l'un des systèmes d'un message d'adressage transmis par l'autre relais provoque l'émission d'un message d'accusé réception par le premier système à destination des deux systèmes. Une fois ces messages d'accusé réception reçus, les deux systèmes relais savent qu'ils disposent de leurs adresses respectives et peuvent donc communiquer.

Chaque système relais effectue alors un transfert d'informations pouvant concerner, par exemple, la base de données de relayage en utilisant l'adresse qu'il a reçue de l'autre système relais. De la même façon, une demande d'ouverture d'une voie (message d'ouverture d'une voie) ainsi que des informations concernant les domaines de routages accessibles par les deux systèmes relais peuvent être échangées.

Une fois que la connexion entre les relais a été établie, l'échange périodique des messages d'adressage peut être interrompu.

Le premier système relais configure la base d'informations de routage 7 utilisée par la fonction de routage des paquets de données, de manière à ce que les paquets de données incluant une adresse de destination établie grâce au message d'adresse du second système relais, puissent être transmis par la connexion qui s'est établie entre les circuits émetteurs-récepteurs 1, 2.

Le système relais configure la base d'informations de routage 7 de manière à délivrer une fonction locale de routage des paquets de données avec des adresses correspondant à leur destination.

Parallèlement, le deuxième système configure, d'une façon similaire, sa base d'informations de relayage pour transmettre des paquets de données (grâce -à la liaison hertzienne précédemment établie) avec une adresse de destination correspondant à celle du premier système relais et pour garder localement les paquets de données qui portent sa propre adresse.

Les deux systèmes relais peuvent alors communiquer.

Les spécifications de routage nécessitent que le système relais sauvegarde les informations relatives aux systèmes relais voisins avant d'établir une connexion avec ces relais.

Une fois cette sauvegarde effectuée, chaque relais transmet périodiquement une demande d'ouverture de voie jusqu'à ce qu'il reçoive de l'autre relais un accusé réception de sa propre demande.

La connexion est alors "officiellement" établie entre les deux systèmes relais.

L'établissement d'une telle connexion n'est pas en soi suffisante pour transmettre à destination les paquets de données.

Pour que cela soit possible, chaque relais doit informer l'autre des destinations contenues dans son domaine de routage. L'annonce de ces routes n'est pas effectuée automatiquement. Elle a lieu à la suite d'une décision motivée d'accepter des paquets de données provenant de domaines de routage éloignés pour les acheminer vers leurs destinations dans leurs domaines de routage.

De ce fait, une fois que la connexion a été établie et si cela n'a pas déjà été fait, chaque système relais doit remettre à jour la partie de la base de données 7 qui définit les règles qui permettent de déterminer des routes vers des destinations contenues dans leurs domaines de routage.

A condition que des règles appropriées existent, chaque système relais enverra aux autres (dans le contexte d'une connexion déjà établie) sa mise à jour pour chaque route qu'il annonce.

Chaque route comprend des informations identifiant un parcours, les attributs du parcours, et les destinations qui peuvent être obtenues, le long et à la fin du parcours (trajets qui sont définis par les différents domaines de routage).

Quand une route est reçue par un système relais, elle est enregistrée dans la base d'informations de routage (RIB) 7 et une écriture correspondante est réalisée par une fonction de relayage incluse dans le bloc 5, de manière à ce que tous les paquets de données comprenant une adresse de destination, qui est aussi une destination de la route, soient transmis par les circuits émetteur-récepteur 1, 2 à destination de l'autre système relais.

En l'absence d'un quelconque autre trafic, le système relais échange périodiquement des messages d'entretien de la connexion. La réception d'un tel message valide les données précédemment reçues et garde la connexion en vie. Si un système relais ne reçoit plus de paquets de données d'un autre système relais avec lequel il se trouvait connecté, et ce, pendant une période de temps importante, la connexion s'interrompt (meurt) et toutes les routes précédemment annoncées par le biais de cette connexion sont décrétées non disponibles et les écritures correspondantes sont supprimées de la base de données de routage 7.

Un système relais peut éventuellement, à chaque instant, interrompre une connexion, par une action engendrant un message d'arrêt. Le transfert et la réception d'un message d'arrêt provoquent, de la même façon, la perte de toutes les routes précédemment annoncées.

Bien entendu, un mécanisme est nécessaire pour faire un choix entre les routes possibles et déterminer celle qui est considérée meilleure que les autres.

Pour effectuer ce choix, chaque système relais implémente un algorithme de sélection de parcours qui est appliqué d'une façon identique par tous les systèmes relais qui se trouvent dans le domaine de routage.

Typiquement, l'algorithme de sélection de parcours effectue la somme pondérée des valeurs des attributs de parcours sélectés (sélectés à partir des attributs de parcours qui décrivent la qualité de service disponible sur ce parcours) et la route, dont ladite somme présente la plus grande valeur, est celle qui est sélectée.

Dans l'exemple représenté figure 1, on a représenté deux exemples de trajets, à savoir :
- un premier trajet utilisé pour assurer une transmission d'informations entre les stations STA et STB, ce trajet utilisant les avions A₃, A₇, A₁₀, A₁₄, A₁₅, A₁₈, et A₂₁ en tant que relais de retransmission,
- un second trajet utilisé pour assurer une communication entre l'avion A₁₂ et la station STA, ce trajet utilisant les avions A₁₁, A₆ et A₁.

Bien entendu, le procédé selon l'invention pourrait en outre utiliser, en combinaison, des systèmes relais installés au sol, à poste fixe, et pouvant être éventuellement couplés aux systèmes de télécommunications existant au sol, ou même avec des systèmes relais montés sur satellites.

Ce procédé pourrait être étendu à la communication D/L mode-S (radar), en conjonction avec un système anticollision, par exemple de type "T-CAS". En effet, dans un tel système, le transfert de données a lieu au moment de la réponse du transpondeur (avion) à l'interrogation du radar (sol). Le système anticollision envoie également des interrogations aux avions autour de lui. Si ces avions sont hors de portée radar, ils peuvent transférer leurs données à l'avion interrogateur (relais) et, de proche en proche, l'information transitera à sa destination.

## Revendications

1. Procédé pour la transmission d'informations entre une station émettrice (STA) et une station réceptrice (STB) séparées par une distance excédant la portée de communication directe desdites stations,
caractérisé en ce qu'il consiste à doter les avions (A₁ à A₂₅) qui volent dans l'espace aérien conformément au cadre normal de leurs activités et évoluent les uns par rapport aux autres d'une façon quasiment aléatoire, de systèmes relais de communication ouverts, de portée limitée, pouvant s'interconnecter momentanément lorsqu'ils se trouvent à portée les uns des autres, pour faire transiter les informations, de système relais en système relais, jusqu'à leur destination, ces systèmes relais constituant des noeuds de transmission dont la configuration varie à chaque instant.

2. Procédé selon la revendication 1,
caractérisé en ce que la transmission des susdites informations s'effectue par voie hertzienne, de type HF ou VHF.

3. Procédé selon l'une des revendications 1 et 2,
caractérisé en ce que les susdites informations se présentent sous la forme de paquets de données contenant chacun des informations d'identification du destinataire ainsi que des informations de routage.

4. Procédé selon l'une des revendications précédentes,
caractérisé en ce que chaque système relais comprend une base d'informations de routage (7), apte à recevoir des informations de routage (4) provenant de systèmes relais voisins qui se trouvent à sa portée, et à élaborer des informations de routage en vue de les transmettre à destination desdits systèmes relais voisins, des moyens de relayage aptes à recevoir (2) les paquets de données émis par les systèmes relais voisins et qui, en vue de les transmettre (1) à destination de l'un de ces systèmes voisins, associent à ces paquets de données des informations de routage déterminées en fonction des données de routage initialement contenues dans lesdits paquets et des informations de routage élaborées par ladite base (7).

5. Procédé selon la revendication 4,
caractérisé en ce que les informations de routage affectées par un système relais à un paquet de données sont déterminées par implémentation d'un algorithme de sélection de parcours (8) permettant de faire un choix entre les routes possibles et de déterminer celle qui est considérée meilleure que les autres.

6. Procédé selon la revendication 5,
caractérisé en ce que l'algorithme de sélection de parcours (8) est appliqué d'une façon identique par tous les systèmes relais qui se trouvent dans le domaine de routage.

7. Procédé selon l'une des revendications 5 et 6,
caractérisé en ce que l'algorithme de sélection de parcours (8) effectue la somme pondérée des valeurs des attributs sélectés et la route dont ladite somme présente la plus grande valeur est celle qui est sélectée.

8. Procédé selon l'une des revendications précédentes,
caractérisé en ce qu'en vue d'établir une connexion entre deux systèmes relais, les deux systèmes relais émettent des messages contenant des données d'adressage de leur propre système, et en ce que la connexion n'est établie que lorsque chaque système relais a reçu un accusé réception de son message, adressé par l'autre système relais, les deux relais qui disposent de leurs adresses respectives pouvant alors communiquer entre eux.

9. Procédé selon la revendication 8,
caractérisé en ce que, une fois que la connexion entre deux systèmes relais a été établie, chaque système relais peut effectuer un transfert d'informations en utilisant l'adresse qu'il a reçue de l'autre système relais, ce transfert pouvant comprendre des informations concernant la base de données de routage (7) ou des domaines de routage accessibles par chacun des deux systèmes relais.

10. Procédé selon l'une des revendications précédentes,
caractérisé en ce que les susdits moyens de relayage d'un premier système relais affectent aux paquets de données à transmettre à un second système relais l'adresse qu'ils ont reçue de ce deuxième système relais lors de la connexion qui s'est établie entre les deux systèmes relais.

11. Procédé selon l'une des revendications précédentes,
caractérisé en ce que chaque système relais sauvegarde les informations relatives aux systèmes relais voisins avant d'établir une connexion avec un autre système relais, en ce qu'une fois cette sauvegarde effectuée, ce relais peut transmettre une demande d'ouverture de voie jusqu'à ce qu'il reçoive d'un relais correspondant un accusé réception de sa propre demande, et en ce que, pour qu'une transmission de paquets de données puisse être effectuée, chaque système relais doit avoir préalablement informé l'autre des destinations contenues dans son domaine de routage.

12. Procédé selon l'une des revendications précédentes,
caractérisé en ce que chaque fois qu'une connexion a été établie entre deux systèmes relais, chaque système relais doit remettre à jour la partie de sa base de données (7) qui définit les règles qui permettent de déterminer des routes vers des destinations contenues dans son domaine de routage.

## Patentansprüche

1. Verfahren zur Übertragung von Informationen zwischen einer Sendestation (STA) und einer Empfangsstation (STB), die voneinander durch eine Entfernung getrennt sind, welche die direkte Kommunikationsreichweite der Stationen überschreitet;
dadurch gekennzeichnet, daß man dabei Flugzeuge (A₁ bis A₂₅); die im normalen Rahmen ihrer Aktivitäten im Luftraum fliegen und sich, in bezug zueinander, auf gleichermaßen zufällige Weise bewegen, mit offenen Relay-Kommunikationssystemen begrenzter Reichweite ausstattet, zwischen denen vorübergehend eine Verbindung entstehen kann, wenn sie sich in Reichweite voneinander befinden, um Informationen von einem Relay-System zu einem anderen Relay-System bis zu ihrem Ziel zu übertragen, wobei diese Relay-Systeme Übertragungsknoten bilden, deren Anordnung ständig variiert.

2. Verfahren nach Anspruch 1; dadurch gekennzeichnet, daß die Übertragung der erwähnten Informationen per Funk vom Typ HF oder VHF erfolgt.

3. Verfahren nach einem der Ansprüche 1 und 2, dadurch gekennzeichnet, daß die erwähnten Informationen in Form von Datenpaketen vorliegen, die jeweils Empfängerkenndaten sowie Routing-Informationen enthalten.

4. Verfahren nach einem der vorhergehenden Ansprüche, dadurch gekennzeichnet, daß jedes Relay-System umfaßt: eine Datenbank mit Routing-Informationen (7), die zum Empfang von Routing-Informationen (4) aus benachbarten, innerhalb ihrer Reichweite liegenden Relay-Systemen und zum Erzeugen von Routing-Informationen befähigt ist, um diese zu den benachbarten Relay-Systemen zu übertragen; und Übertragungsmittel, die zum Empfang (2) der von den benachbarten Relay-Systemen gesendeten Datenpakete befähigt sind und die zur Übertragung (1) an eines der benachbarten Systeme mit diesen Datenpaketen Routing-Informationen verknüpfen, die in Abhängigkeit von den ursprtinglich in den Datenpaketen enthaltenen Routing-Daten und den von der Datenbank (7) erzeugten Routing-Informationen festgelegt werden.

5. Verfahren nach Anspruch 4, dadurch gekennzeichnet, daß die Routing-Informationen, die ein Relay-System einem Datenpaket zuordnet, durch Erzeugung eines Algorithmus zur Wahl des Pfades (8) bestimmt werden, der eine Auswahl unter den möglichen Routen und die Bestimmung der besten Route ermöglicht.

6. Verfahren nach Anspruch 5; dadurch gekennzeichnet, daß der Algorithmus zur Wahl des Pfades (8) bei allen Relay-Systemen, die sich im Bereich des Leitwegs befinden, in identischer Weise zur Anwendung kommt.

7. Verfahren nach einem der Ansprüche 5 und 6, dadurch gekennzeichnet, daß der Algorithmus zur Auswahl des Pfades (8) die gewichtete Summe der Werte der ausgewählten Merkmale bildet, und daß die Route, deren Summe den größten Wert besitzt, gewählt wird.

8. Verfahren nach einem der vorhergehenden Ansprüche, dadurch gekennzeichnet, daß zwei Relay-Systeme zur Herstellung einer Verbindung untereinander Nachrichten senden, welche die Adreßdaten ihres eigenen Systems enthalten, und daß die Verbindung nur dann hergestellt wird, wenn jedes Relay-System von dem jeweils anderen Relay-System eine Empfangsbestätigung für seine Nachricht erhalten hat, so daß die beiden Relay-Systeme, die über die entsprechenden Adressen verfügen, miteinander kommunizieren können.

9. Verfahren nach Anspruch 8, dadurch gekennzeichnet, daß jedes Relay-System, sobald die Verbindung zwischen zwei Relay-Systemen hergestellt worden ist, Informationen unter Verwendung der von dem anderen Relay-System empfangenen Adresse übertragen kann, wobei diese Übertragung Informationen umfassen kann, welche die Routing-Datenbank (7) oder Bereiche des Leitwegs betreffen, die jedem der beiden Relay-Systeme zugänglich sind.

10. Verfahren nach einem der vorhergehenden Ansprüche, dadurch gekennzeichnet, daß die erwähnten Übertragungsmittel eines ersten Relay-Systems den an das zweite Relay-System zu übertragenden Datenpaketen die Adresse zuweisen, die sie von dem zweiten Relay-System bei der Herstellung der Verbindung zwischen den beiden Relay-Systemen empfangen haben.

11. Verfahren nach einem der vorhergehenden Ansprüche, dadurch gekennzeichnet, daß jedes Relay-System die Informationen speichert, welche die benachbarten Relay-Systeme betreffen, bevor es eine Verbindung zu einem anderen Relay-System herstellt, daß das Relay-System nach dem Abspeichern eine Anforderung zur Freigabe des Leitweges senden kann, bis es von einem entsprechenden Relay-System eine Empfangsbestätigung für seine eigene Anforderung empfängt, und daß jedes Relay-System, damit eine Übertragung von Datenpaketen erfolgen kann, das andere zuvor über die in seinem Bereich des Leitwegs enthaltenen Ziele informieren muß.

12. Verfahren nach einem der vorhergehenden Ansprüche, dadurch gekennzeichnet, daß jedesmal, wenn eine Verbindung zwischen zwei Relay-Systemen hergestellt wurde, jedes Relay-System den Teil seiner Datenbank (7) aktualisiert, der die Regeln zur Bestimmung der Routen zu in seinem Bereich des Leitwegs enthaltenen Zielen definiert.

## Claims

1. A method for transmitting information between an emitting station (STA) and a receiving station (STB) separated by a distance exceeding the range of direct communications of said stations,
characterized in that said method consists in equipping the airplanes (A₁ - A₂₅) flying in the airspace within their normal activities and travelling in an almost random manner in relation to one another, with open communications relay systems of limited range which can momentarily interconnect, when within range of one another, in order to pass information from relay system to relay system up to its destination, said relay systems constituting transmission nodes of which the configuration varies constantly.

2. The method as claimed in claim 1,
characterized in that said information is transmitted by HF or VHF type radio.

3. The method as claimed in one of claims 1 and 2,
characterized in that said information is in the form of data packets each containing destination equipment identification data and routing information.

4. The method as claimed in one of the preceding claims,
characterized in that each relay system comprises a routing data base (7) susceptible of receiving routing information (4) from neighboring relay systems within its range, and of elaborating routing information with a view to transmission thereof to said neighboring relay systems, a relaying means susceptible of receiving (2) the data packets transmitted by said neighboring relay systems and which, with a view to transmission (1) thereof to one of said neighboring systems, associates, with these data packets, routing information determined as a function of the routing data initially contained in said packets and routing information elaborated by said base (7).

5. The method as claimed in claim 4,
characterized in that the routing information assigned to a data packet by a relay system is determined by implementation of a path selection algorithm (8) enabling a choice to be made between the different possible routes and enabling determination of the route deemed the best.

6. The method as claimed in claim 5,
characterized in that the path selection algorithm (8) is applied in an identical manner by all the relay systems situated within the routing range.

7. The method as claimed in one of claims 5 and 6,
characterized in that the path selection algorithm (8) computes the weighted sum of the values of the attributes selected and the route selected is the one whose sum has the highest value.

8. The method as claimed in one of the preceding claims,
characterized in that, with a view to setting up a connection between two relay systems, said two relay systems transmit messages containing addressing data of their own system, and in that said connection is only set up when each relay system has received an acknowledgement of its message, addressed by the other relay system, the two relays in possession of their respective addresses being then able to communicate with one another.

9. The method as claimed in claim 8,
characterized in that, once the connection has been set up between said two relay systems, each relay system can transfer information by using the address it received from said other relay system, said transfer being susceptible of comprising information concerning said routing data base (7) or routing scopes accessible by each of said two relay systems.

10. The method as claimed in one of the preceding claims,
characterized in that said relaying means of a first relay system assigns to said data packets to be transmitted to a second relay system the address they received from said second relay system at the time said connection was set up between said two relay systems.

11. The method as claimed in one of the preceding claims,
characterized in that each relay system saves the information concerning the neighboring relay systems prior to setting up a connection with another relay system, and in that, once this saving has been performed, said relay can transmit a request to have a channel opened until it receives, from a corresponding relay, an acknowledgement of its own request, and in that, for a data packet to be transmitted, each relay system must have previously informed the other as to the destinations contained within its scope of routing.

12. The method as claimed in one of the preceding claims,
characterized in that each time a connection has been set up between two relay systems, each relay system must update its data base (7) defining the rules enabling the determining of routes to destinations contained within its scope of routing.
